# EUROPEAN PATENT APPLICATION

(11) **EP 4 119 420 A1**
(43) Date of publication of application: **18.01.2023**
(21) Application number: 22179933.1
(22) Date of filing: 20.06.2022
(51) Int. Cl.: B62B 3/00, A47L 13/51, B08B 1/00

(54) **TROLLEY FOR FLOOR MOP**

(30) Priority: 16.07.2021 IT 202100018914
(71) Applicant: Taxon S.r.l., 16019 Ronco Scrivia (IT)
(72) Inventor: Ravasio, Alberto, Ronco Scrivia (IT)
(74) Representative: Perani & Partners S.p.A.

(57) **Abstract**

A trolley (1) for floor mop (14) is described which comprises
- a platform (2) which extends substantially in a plane (XY) and which has a bearing surface (21);
- a plurality of wheels (3) connected to the platform (2) to move the platform (2);
- cleaning elements configured to rest on the bearing surface (21), wherein the cleaning elements comprise:
- a first container (4) resting on the platform (2) and configured to contain detergent liquid; the first container (4) comprises
- a compartment (41) configured to contain said detergent liquid;
- a lid (42) comprising a bottom (43) configured to close the compartment (41) and an edge (44) which extends away from the bottom (43) to define a tank (5) in fluid communication with the compartment (41) and configured to contain the detergent liquid,
- a pipe (45) connecting the compartment (41) and the tank (5), the trolley (1) further comprises
- fluid transfer means (12) located at said first container (4) and configured to pour detergent liquid from the compartment (41) to the tank (5) via the pipe (45).

## Description

### FIELD OF APPLICATION

The present invention relates to a trolley for floor mop, suitable for cleaning floors in enclosed spaces, predominantly in non-domestic areas.

The present invention finds useful use specifically in the case of hospitals and nursing homes, but also, more generally, in private or public environments such as offices, restaurants, or schools. The present invention is useful for use by cleaners in charge of such environments.

### Description of the prior art

Various types of trolleys for floor mops are known in the state of the art. A known type provides a bearing platform on which a bucket containing detergent liquid is placed, into which a pad is immersed which is then wrung according to known methods, for example manually or mechanically with the aid of a special section in the bucket. For ease of transport, such a platform has wheels or the like, so that a cleaner can easily move from one area of the environment he or she is cleaning to another one.

Some of these trolleys also comprise an annular seat provided for storing a garbage bag, so that it is possible to discard any waste as the cleaning operation proceeds.

Such trolleys may also have compartments and shelves on which to place various objects useful for cleaning, such as a broom, the mop itself, pads, detergents or other.

A known trolley in particular provides that the bucket, in which the detergent liquid is placed, comprises a smaller tray, inserted internally to the bucket and kept raised with respect to the level of the detergent liquid contained in the bucket. In particular, this tray is shaped to hold a smaller amount of liquid than the bucket, suitable for impregnating a single pad. This amount of liquid is poured by an operator in charge, from the bucket into the tray. In this type of trolley, pouring is done manually by the operator. Specifically, the operator, through the head of the mop itself, tilts the tray towards the inside of the bucket, mechanically engaging a top portion of the specially shaped tray.

### Problem of the prior art

Disadvantageously, this operation of pouring from the bucket to the tray does not prevent the person in charge from using his or her hands, which is instead desirable to minimize cross-contamination. Moreover, this operation is not very immediate and slow.

### SUMMARY OF THE INVENTION

In this context, the technical task underlying the present invention is to provide a trolley for floor mop which obviates the drawbacks in the prior art as described above.

In particular, it is an object of the present invention to provide a trolley for floor mop which is convenient for a person in charge of cleaning to use, and which allows the person in charge not to use his or her hands.

A further object of the present invention is to provide a trolley for floor mop that quickly delivers a suitable amount of liquid to impregnate a pad.

The defined technical task and the specified aims are substantially achieved by a trolley for floor mop comprising the technical characteristics set forth in one or more of the appended claims.

### BRIEF DESCRIPTION OF THE DRA WINGS

Further features and advantages of the present invention will become more apparent from the approximate and thus non-limiting description of a preferred, but non-exclusive, embodiment of a trolley for floor mop, as illustrated in the accompanying drawings, wherein:

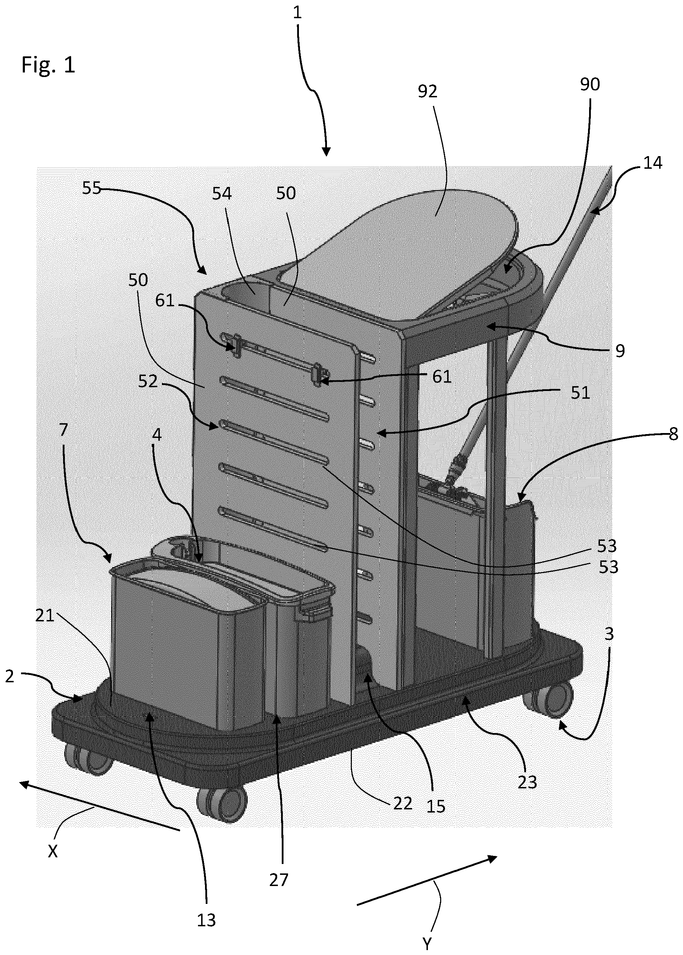

- Figure 1 shows a perspective view of an embodiment of a trolley for floor mop in accordance with the present invention;
- Figure 2 shows a partially sectional perspective view of a detail of Figure 1;

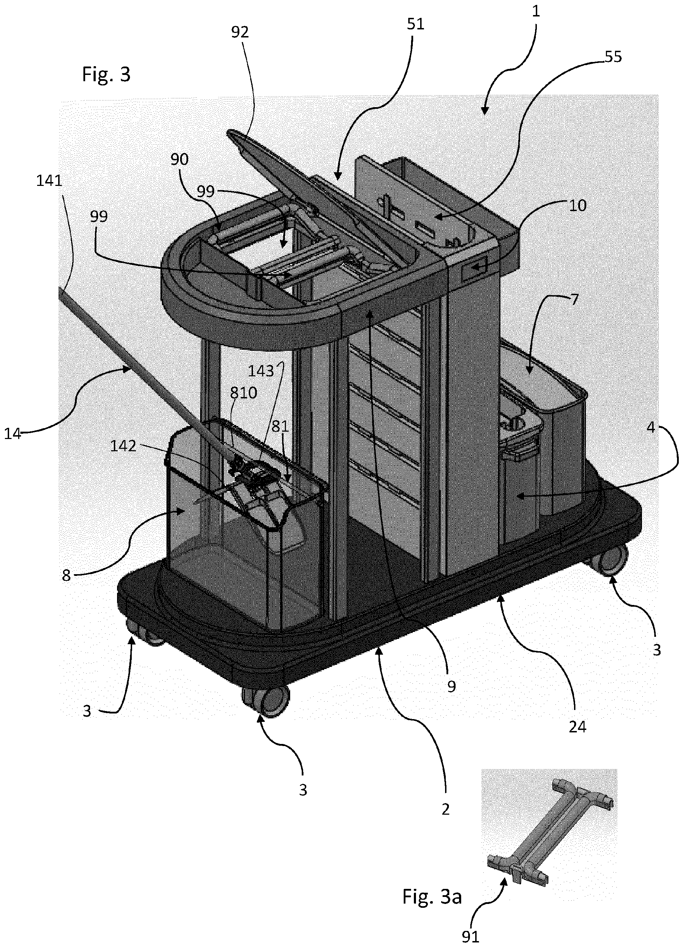

- Figure 3 shows a further perspective view of the trolley of Figure 1;
- Figure 3a shows a detail of the trolley of Figure 3;

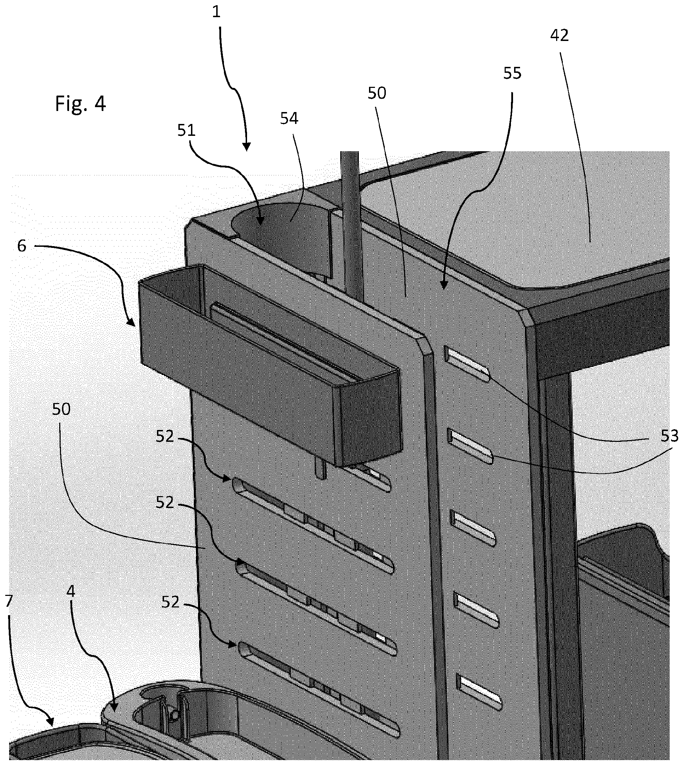

- Figure 4 shows a perspective view of some details of the trolley of Figure 1;

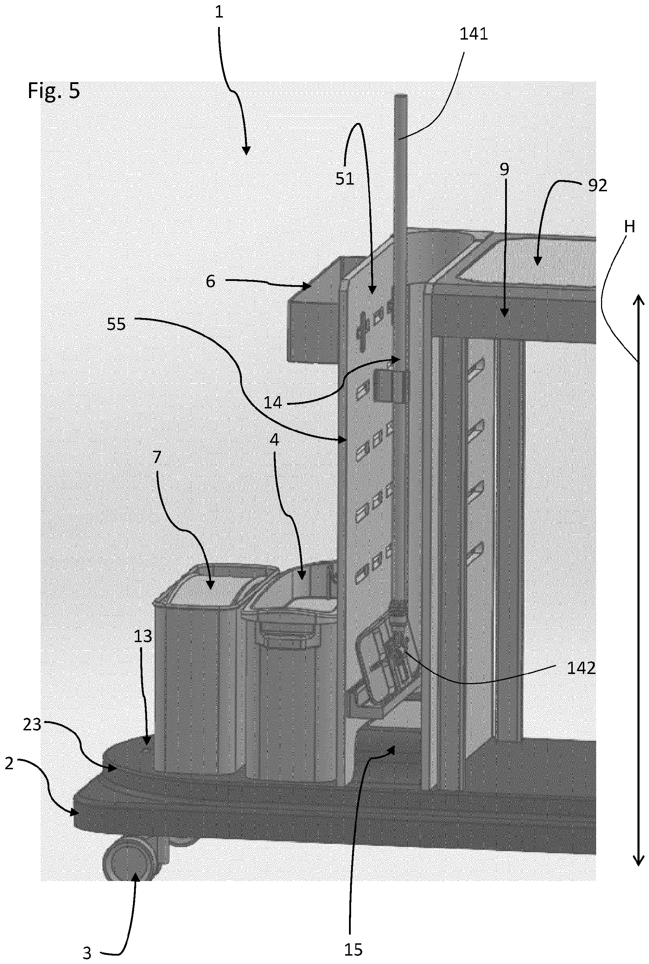

- Figure 5 shows a side view of a portion of the trolley of Figure 1;
- Figure 6 shows a perspective view of a further embodiment of a trolley for floor mop in accordance with the present invention;
- figures 7a and 7b show a perspective view of some details of the trolley of Figure 6;

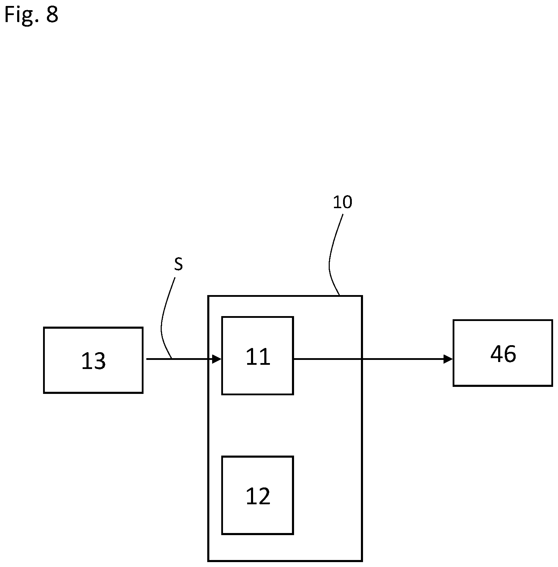

- Figure 8 shows schematically the operation of a trolley in accordance with the present invention.

### DETAILED DESCRIPTION

With reference to the accompanying figures, a trolley for floor mop 14 is indicated with 1.

The trolley 1 for floor mop 14 comprises a platform 2 that extends substantially in a plane XY. Plane XY means a plane defined by a first main development direction X and a second main development direction Y. The first X and the second Y main development direction are perpendicular to each other.

The platform 2 has a bearing surface 21, configured to receive cleaning elements, and a base surface 22 opposite to the bearing surface 21. Preferably, the platform 2 is made of plastic.

The platform 2 has a peripheral profile 23 surrounding the bearing surface 21. Preferably, the peripheral profile 23 is configured to prevent any objects resting on the bearing surface 21 from falling off. In other words, preferably the peripheral profile 23 is at least partially raised with respect to the bearing surface 21.

In alternative embodiments, the peripheral profile 23 is not raised with respect to the bearing surface 21.

The trolley 1 also comprises a plurality of wheels 3 connected to the platform 2 to move the platform 2. In particular, the plurality of wheels 3 is placed at the base surface 22.

The trolley 1 comprises cleaning elements. These cleaning elements comprise a first container 4 resting on the platform 2 and configured to hold detergent liquid. The first container 4 comprises a compartment 41 configured to hold the detergent liquid. This compartment 41 is defined by a container body 410 preferably having a prismatic or truncated conical shape.

Preferably, the container body 410 has a capacity comprised between 5 and 30 litres. More preferably, the container body 410 has a capacity of 15 litres.

In accordance with the present invention, the first container 4 comprises a lid 42, placed to cover the compartment 41. The lid 42, in particular, is configured to couple with the container body 410 and has perimetrically the same shape as the container body 410.

In particular, the lid 42 comprises a bottom 43 configured to close the compartment 41. Preferably the bottom 43 is shaped to completely close the compartment 41.

The lid 42 further comprises an edge 44 that extends away from the bottom 43 to define a tank 5. Specifically, when the lid 42 is coupled to the container body 410, the edge 44 extends in the opposite direction to the compartment 41.

In accordance with the present invention, the tank 5 is placed in fluid communication with the compartment 41 and is configured to hold the detergent liquid.

Preferably, the tank 5 has a capacity comprised between 100 ml and 1 litre. More preferably, the tank 5 has a capacity comprised between 400 and 800 ml.

The first container also comprises a pipe 45 connecting the compartment 41 and the tank 5. The pipe 45 has a first end 451 connected to the pump 46 at the compartment 41 and a second end 452 at the tank 5.

It is worth noting that the trolley 1 according to the present invention further comprises fluid transfer means 12 located at the first container 4 and configured to pour detergent liquid from the compartment 41 to the tank 5 via the pipe 45.

In greater detail, preferably the fluid transfer means 12 comprise a pump 46.

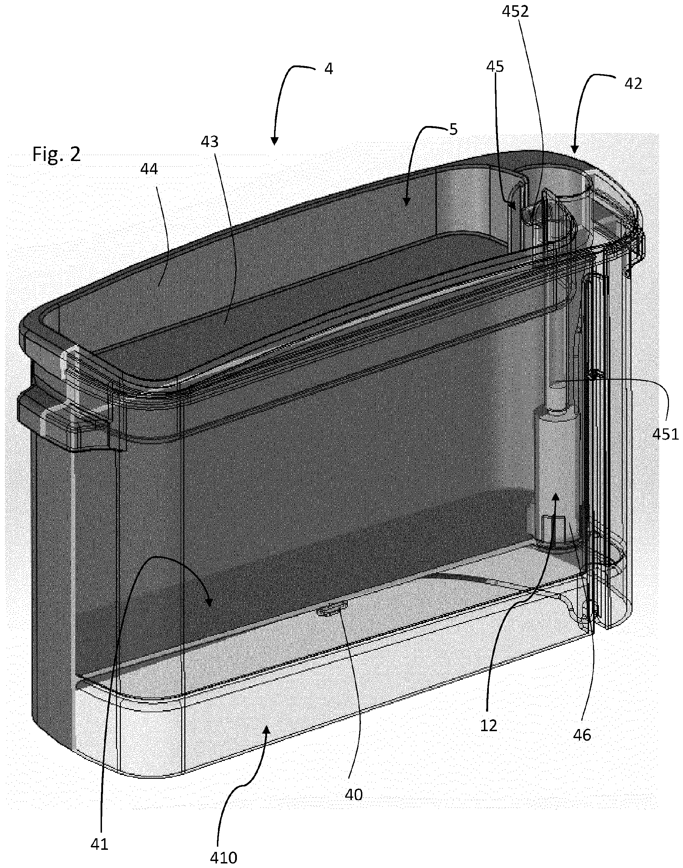

The pump 46 is preferably located at the compartment 41. Optionally, the pipe 45 and the pump 46 are arranged within a thickness obtained in the container body 410, as visible in Figure 2.

According to a preferred embodiment, the fluid transfer means 12 are automated. Alternatively, the fluid transfer means 12 are manually operated by an operator, for example by means of a lever (not illustrated).

In accordance with the preferred embodiment, the trolley 1 comprises a control panel 10. The control panel 10 comprises a control unit 11 placed in signal communication with the pump 46. In particular, the control unit 11 is configured to actuate the pump 46 and to dose an amount of detergent liquid from the compartment 41 to the tank 5. The amount of dosed liquid is preferably comprised between 300 and 700 ml.

Preferably, the pump 46 is configured to deliver an amount of liquid of 500 ml, in a time comprised between 1 and 10 seconds, more preferably of 2 seconds.

Always preferably, the delivery of liquid is signalled by an acoustic signal.

Again, the control panel 10 comprises a user interface 12, which is embodied substantially by a touch screen and/or control keys (not illustrated).

The control unit 11 is placed in signal communication with the user interface 12 and can be actuated via the user interface 12 by the user. The user interface 12 may allow one or more users to create various user areas so that each user can access a personal user area that allows access to different predetermined functions.

Preferably, the trolley 1 further comprises a sensor 13. Such a sensor 13 is preferably a sensor configured to detect the presence of a body at a predetermined distance. The sensor 13 is further configured to generate a first signal S and to transmit the first signal S to the control unit 11 to actuate the pump 46 and pour detergent liquid from the compartment 41 to the tank 5.

Accordingly, the pouring of detergent liquid from the compartment 41 to the tank 5 is fully automated and an operator, via the user interface 12, can set parameters for example relating to the amount of liquid to be poured with each delivery.

According to a preferred embodiment, the sensor 13 is placed on the peripheral profile 23. Advantageously, the sensor 13 detects when a user approaches the mop to the platform 2, and the control unit 11 actuates the pump 46.

The sensor 13 can be placed also elsewhere.

Preferably, the trolley 1 comprises one or more walls 55 longitudinally extending starting from the platform 2 in the opposite direction to the wheels 3. These walls 55 define a housing 51 configured to house a floor mop 14.

Preferably, the walls 55 comprise two parallel walls 50 and a joining wall 54, interposed between the two parallel walls 50.

Preferably, the above-mentioned control panel 10 is placed at these walls 55.

According to the preferred embodiment, the trolley 1 comprises supply means (not illustrated) such as cables and/or batteries configured to power the control panel 10 and the pump 46. Accordingly, the trolley 1 further comprises a first connection 40 placed at the first container 4, and connected to the pump 46, and a second connection (not illustrated) placed at the platform 2. The second connection is connected with the supply means and is configured to connect the pump 46 to the supply means. In particular, the platform 2 comprises an appropriate first seat 27 configured to receive the first container 4. In particular, the second connection is placed at the first seat 27. The first connection 40 is configured to connect to the second connection when the first container 4 is placed on the platform 2, in the appropriate first seat 27. The first connection 40 and the second connection are configured for example with a plug-socket system or with two interfaces configured to connect via mutual contact.

Preferably, the trolley 1 further comprises a supply compartment 15, configured to house the above-mentioned supply means. The supply compartment 15 is for example obtained in the housing 51. Accordingly, preferably the supply compartment 15 is placed at the platform 2, raised with respect to the bearing surface 21. Alternatively, the supply compartment 15 can be obtained inside the platform 2 or below the platform 2.

Still preferably, the walls 55 comprise a plurality of guides 52. More preferably, the guides 52 are on the parallel walls 50.

In accordance with the preferred embodiment of the invention, the guides 52 are defined by a plurality of through holes 53 defined on the surfaces of the walls 55.

The trolley 1, in accordance with the embodiment that includes the guides 52, comprises one or more holding trays 6. The holding tray 6 is connectable to the wall 55. In particular, the holding tray 6 comprises coupling members 61 configured to fit into the through holes 53. The holding tray 6 is shaped to accommodate various objects such as personal items of the operator in charge.

Always preferably, the platform 2 is modular. In particular, the platform 2 comprises at least one base module 24 connected to the wheels 3. The platform 2 further comprises at least one detachable portion 25 of the peripheral profile 23 that is detachable from the base module 24. In detail, the detachable portion 25 and the base module 24 comprise mutual attachment elements (not illustrated) configured to removably connect the detachable portion 25 and the base module 24. Preferably, the attachment elements are interlocking elements, which can be coupled by sliding the detachable portion 25 in a direction orthogonal to the plane XY.

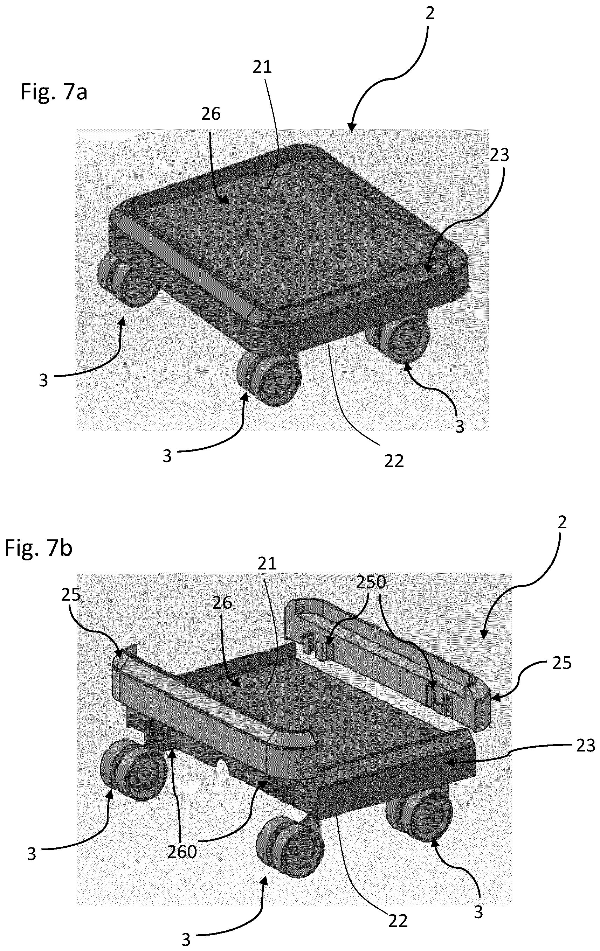

The platform 2 may also comprise an additional module 26, configured to connect to the base module 24 and to the detachable portion 25. With particular reference to Figures 7a and 7b, the additional module 26 comprises respective attachment elements 260 for removably connecting the detachable portion 25 and the additional module 26, so that the additional module is connectable to the base module 24. The attachment elements 260 are in fact compatible with the attachment elements 250 of the detachable portion 25 and of the base module 24.

Preferably, the cleaning elements further comprise a second container 7 that can be rested on the platform 2 and configured to contain replacement pads compatible with the mop 14.

The second container 7 is configured to be adjoining the first container 4 in order to facilitate the cleaning operations for an operator. Still preferably, in case the second container 7 is present, the sensor 13 is placed on platform 2 at the second container 7. Advantageously, when an operator picks up a clean pad, the sensor 13 detects the movement and actuates the delivery of detergent liquid in the tank 5.

The cleaning elements also comprise, preferably, a third container 8 that can be rested on the platform 2. The third container 8 is configured to contain dirty pads.

Optionally, the third container 8 comprises a release element 81, configured to couple to a head of a mop 14 to release a pad connected to the head of the mop 14. This release element 81 is configured, for example, with a bar 810 placed on a top of the container in a direction parallel to the plane XY.

Always preferably, the trolley 1 comprises a bag compartment 9 which comprises an annular profile 90 configured to receive a garbage bag.

The annular profile 90 is preferably interposed between the third container 8 and the walls 55. The annular profile 90 may be shaped to receive a single garbage bag or two garbage bags. Preferably, the annular profile 90 may be shaped to receive a single bag but it may be adapted to receive two bags. Accordingly, the trolley 1 preferably comprises an adapter 91 configured to fit on the annular profile 90 and divide the space defined by the annular profile 90 into two parts. The adapter 91 comprises in particular two tubulars of which the two mutual ends are configured to fit in a central portion of the annular profile 90, so as to split the single annular profile 90 into two annular profiles 99.

Preferably, the bag compartment 9 comprises a covering element 92 which is placed so as to close the annular profile 90. This covering element 92 can be opened/closed by means of a photocell or similar. The photocell is for example located at the annular profile 90 or the walls 55, next to the control panel 10. In accordance with this embodiment, the photocell is placed in signal communication with the control unit 11 and the covering element 92 is also supplied by the aforementioned supply means.

According to a preferred embodiment, the base module 24 comprises at least the first seat 27 and the annular profile 90.

According to a preferred embodiment, the additional module 26 is configured to contain the second and/or the third container.

According to preferred embodiments, the trolley 1 comprises a base module 24 and an additional module 26, or two base modules 24 and two additional modules 26.

In the embodiment that provides two base modules 24, there are provided two first containers 4 in which it is possible to place two different detergent liquids. Both first containers 4 comprise a respective pump 46 in signal communication with the control unit 11 and a respective tank 5. An operator can set, via the user interface 12, which first container 4 to use, so as to deliver the desired detergent liquid into the tank 5.

Preferably, the platform 2 of the trolley 1 has dimensions comprised between 50 and 300 cm, in the plane XY. Preferably, the platform 2 has a first dimension of 61 cm and a second dimension of 85 cm, when in case of a single base module 24.

Preferably, the detachable portions 25 have a first dimension comprised between 7 and 10 cm, more preferably of 7 cm.

Still preferably, the additional module 26 has a second dimension equal to the second dimension of the base module 24, and a first dimension comprised between 30 and 50 cm. Preferably the additional module 26 has a second dimension of 38 cm.

Always preferably, the trolley 1 has a height H comprised between 100 and 130 cm. More preferably, the trolley 1 has a height H of 115 cm. Preferably, the annular profile 90 and the control panel 10 are placed at the top of the trolley 1, i.e. at a height equal to about the height H of the trolley 1. Preferably, at this top the trolley 1 also has a handle 16, to make it easier for the operator to transport the trolley 1. Advantageously, the trolley 1 is conveniently easy to handle in its functions, and transportable by a standing operator.

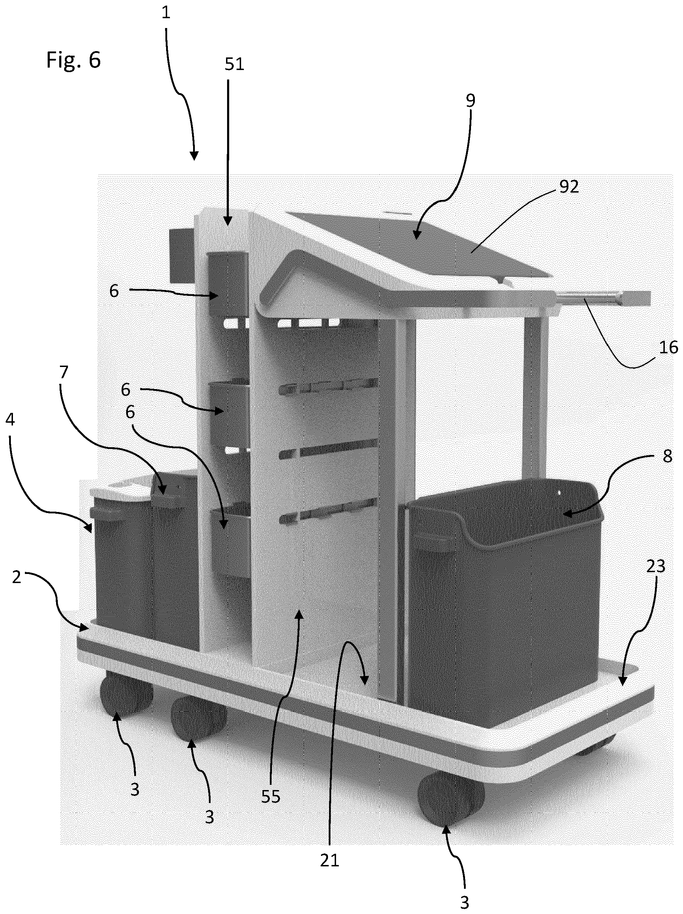

Optionally, some components of the trolley 1 may also have an ergonomic shape, such as the bag compartment 9, as shown in Figure 6.

In accordance with the present invention, the trolley 1 described above also comprises a mop 14, available in the aforementioned housing 51. In particular, the mop 14 comprises a stick 141 extending longitudinally between two ends. The mop 14 comprises a head 142 placed at one end. The mop 14 is connectable to a pad (not illustrated) shaped to fit on the head 142. The head 142 is preferably of the foldable type, comprising two ends that can be approached to detach the pad.

Accordingly, preferably the tank 5 is shaped like the head 142 of the mop 14.

At the head 142, the mop 14 comprises an unlocking element 143, configured to fold the two ends of the head 142 being approached to detach the pad. This unlocking element is also configured to lock the head 142 in a substantially flat position in order to be able to clean a floor when the pad is mounted.

## Claims

1. A trolley (1) for floor mop (14) comprising:
- a platform (2) extending substantially in a plane (XY) and having a bearing surface (21);
- a plurality of wheels (3) connected to said platform (2) to move said platform (2), said plurality of wheels (3);
- cleaning elements configured to rest on said bearing surface (21), said cleaning elements comprising:
- a first container (4) resting on said platform (2) and configured to contain detergent liquid; said first container (4) comprising:
- a compartment (41) configured to contain said detergent liquid;
**characterized in that**
said first container (4) comprises
- a lid (42) comprising a bottom (43) configured to close the compartment (41) and an edge (44) extending away from the bottom (43) to define a tank (5) in fluid communication with the compartment (41) and configured to contain said detergent liquid;
- a pipe (45) connecting the compartment (41) and the tank (5);
said trolley (1) further comprising:
- fluid transfer means (12) located at said first container (4) and configured to pour detergent liquid from the compartment (41) to the tank (5) via said pipe (45).

2. A trolley (1) according to claim 1, wherein said fluid transfer means (12) comprise a pump (46); said trolley (1) further comprising a control panel (10) comprising a control unit (11) placed in signal communication with said pump (46), said control unit (11) being configured to actuate said pump (46) and to dose an amount of detergent liquid from the compartment (41) to the tank (5).

3. A trolley (1) according to claim 2, further comprising:
- a sensor (13) configured to detect the presence of a body at a predetermined distance, said sensor (13) being further configured to generate a first signal (S) and to transmit said first signal (S) to the control unit (11) to actuate said pump (46) and to pour detergent liquid from the compartment (41) to the tank (5).

4. A trolley (1) according to claim 3, comprising two or more walls (55) extending longitudinally starting from the platform (2) in the opposite direction to the wheels (3), said walls (55) defining a housing (51) configured to house a floor mop (14), said control panel (10) being placed at said walls (55).

5. A trolley (1) according to claim 4, wherein the platform (2) has a peripheral profile (23); said sensor (13) being placed on said peripheral profile (23) or at said walls (55).

6. A trolley (1) according to claim 4 or 5, wherein said platform (2) comprises at least one base module (24) connected to said wheels (3); said platform (2) comprising at least one detachable portion (25) of said peripheral profile (23), said detachable portion (25) being detachable from said base module (24); said detachable portion (25) and said base module (24) comprising mutual attachment elements configured to removably connect said detachable portion (25) and said base module (24).

7. A trolley (1) according to any one of claims 4 to 6, wherein said walls (55) comprise a plurality of guides (52).

8. A trolley (1) according to claim 7, wherein said guides (52) are defined by a plurality of through holes (53).

9. A trolley (1) according to claim 8, comprising a holding tray (6) connectable to the wall (55), said holding tray (6) comprising coupling members (61) configured to fit into said through holes (53).

10. A trolley (1) according to any one of the preceding claims, wherein said cleaning elements further comprise:
- a second container (7) resting on said platform (2) and configured to contain replacement pads; said second container (7) adjoining said first container (4);
- a third container (8) resting on said platform (2) and configured to contain dirty pads, said third container (8) comprising a release element (81) configured to be coupled to a head of a mop (14) to release a pad connected to the head of the mop (14);
- an annular profile (90) configured to receive a garbage bag, interposed between the third container (8) and said walls (55).
